# EUROPEAN PATENT SPECIFICATION

(11) **EP 3 565 912 B1**
(45) Date of publication and mention of the grant of the patent: **07.04.2021**
(21) Application number: 17829794.1
(22) Date of filing: 15.12.2017
(51) Int. Cl.: C22C 9/06, F16J 9/26

(54) **PISTON COMPRESSION RINGS OF COPPER ALLOYS**
KOLBENRING AUS EINER KUPFERLEGIERUNG
SEGMENT DE COMPRESSION POUR PISTON EN ALLIAGE DE CUIVRE

(30) Priority: 06.01.2017 US 201762443462 P
(43) Date of publication of application: 13.11.2019
(73) Proprietor: Materion Corporation, Mayfield Heights, OH 44124 (US)
(72) Inventor: KRUS, David J., Mayfield Heights, Ohio 44124 (US); MACK, Steffen, Mayfield Heights, Ohio 44124 (US); WHITAKER, Andrew J., Mayfield Heights, Ohio 44124 (US)
(74) Representative: Kador & Partner PartG mbB
(86) International application number: PCT/US2017/066662
(87) International publication number: WO 2018/128774

(56) References cited:
- EP-A1- 3 045 555
- GB-A- 939 008
- US-A1- 2008 000 444
- Ampco Metal: "Technical Data Sheet AMPCOLOY 944", , 23 March 2015 (2015-03-23), XP055455536, Retrieved from the Internet: URL:https://www.ampcometal.com/documents/A 944_EX_E.pdf [retrieved on 2018-03-01]
- B.J. TAYLOR ET AL: "A review of piston ring and cylinder liner materials", TRIBOLOGY INTERNATIONAL, vol. 12, no. 2, 1 April 1979 (1979-04-01), pages 79-89, XP055455663, ISSN: 0301-679X, DOI: 10.1016/0301-679X(79)90006-9

## Description

### CROSS-REFERENCE TO RELATED APPLICATIONS

This application claims priority to U.S. Provisional Patent Application No. 62/443,462, filed on January 6, 2017.

### BACKGROUND

The present disclosure relates to compression rings made from a copper alloy. The compression rings may be used in pistons (e.g., for internal combustion engines). The rings may exhibit high thermal conductivity, good wear resistance, and thermal stability.

Increasing engine efficiency (roughly translated as distance traveled per amount of fuel consumed, or miles per gallon) is a goal for many engine makers and automotive OEMs. In auto racing, it is a matter of maximizing horsepower. In passenger cars, upcoming EU greenhouse gas emissions standards have made engine efficiency a priority for European original equipment manufacturers (OEMs). However, the market expects no performance decrease, so that smaller engines are expected to produce just as much horsepower and torque as larger engines. Increasing the power density (horsepower per liter) and brake mean effective pressure (BMEP) requires turbocharging or supercharging, which increases pressure and temperature within the engine.

Crevice volume in an engine cylinder is the annular volume of the gap between the piston and cylinder liner, from the top compression ring to the piston crown. Because fuel in the crevice does not undergo combustion, minimizing crevice volume increases engine efficiency. One method of reducing crevice volume is to move the top compression ring closer to the piston crown. However, as the top compression ring is moved closer to the piston crown, where combustion is taking place, the temperature of the top compression ring groove increases, which reduces the yield strength and fatigue strength of the piston material. When the top compression ring groove reaches a given temperature, which depends on the piston alloy used, the heat-reduced strength of the piston will lead to wear in the groove. Excessive groove wear can result in other inefficiencies such as blowby. These inefficiencies can negate the advantage of moving the top compression ring closer to the piston crown, and at worst, result in engine failure.

Piston compression ring materials currently in use limit the ability of designers to increase efficiency by moving the position of the top compression ring. Alloys with good wear resistance and thermal stability, like the cast iron and steel materials commonly used in piston rings, typically have low thermal conductivity. It would be desirable to provide compression rings with high thermal conductivity, good wear resistance, and thermal stability GB939008A discloses a piston ring with increased thermal and sliding properties.

### BRIEF DESCRIPTION

The present disclosure relates to piston rings made from a copper-containing alloy that comprises copper, nickel, silicon, and chromium. The piston rings may be used in pistons (e.g., for internal combustion engines). The piston rings exhibit high thermal conductivity, good wear resistance, and thermal stability. Methods of making piston assemblies containing the rings are also disclosed.

Also disclosed herein in various embodiments are piston assemblies, comprising: a piston body comprising a top ring groove; and a piston ring in the top ring groove, the piston ring being formed from a copper-containing alloy that comprises copper, nickel, silicon, and chromium as described herein.

Also disclosed are methods of improving engine efficiency, comprising using a piston assembly in an engine, the piston assembly being made with a piston ring that is formed from a copper-nickel-silicon-chromium-containing alloy as described herein.

The invention is disclosed in the appended claims.

### BRIEF DESCRIPTION OF THE DRAWINGS

The following is a brief description of the drawings, which are presented for the purposes of illustrating the exemplary embodiments disclosed herein and not for the purposes of limiting the same.
**FIG.** 1 is a perspective view of a piston assembly in accordance with some embodiments of the present disclosure.
**FIG.** 2 is a set of illustrations of different cross-sections that the piston compression rings of the present disclosure may be made with.
**FIG.** 3 is a set of illustrations of different joint ends that the piston compression rings of the present disclosure may be made with.

### DETAILED DESCRIPTION

A more complete understanding of the articles / devices, processes and components disclosed herein can be obtained by reference to the accompanying drawings. These figures are merely schematic representations based on convenience and the ease of demonstrating the present disclosure, and are, therefore, not intended to indicate relative size and dimensions of the devices or components thereof and/or to define or limit the scope of the exemplary embodiments.

Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

The singular forms "a," "an," and "the" include plural referents unless the context clearly dictates otherwise.

Numerical values in the specification and claims of this application should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values).

Pistons are engine components (typically cylindrical components) that reciprocate back and forth in a bore (typically a cylindrical bore) during the combustion process. The stationary end of a combustion chamber is the cylinder head and the movable end of the combustion chamber is defined by the piston.

Pistons may be made of cast aluminum alloy to achieve desired weight and thermal conductivity. Thermal conductivity is a measure of how well a particular material conducts heat, and has SI units of Watts/(meter•Kelvin).

Aluminum and other piston body materials expand when heated. An appropriate amount of clearance must be included to maintain free movement in the bore. Too little clearance can cause the piston to stick in the cylinder. Too much clearance may lead to compression losses and increased noise.

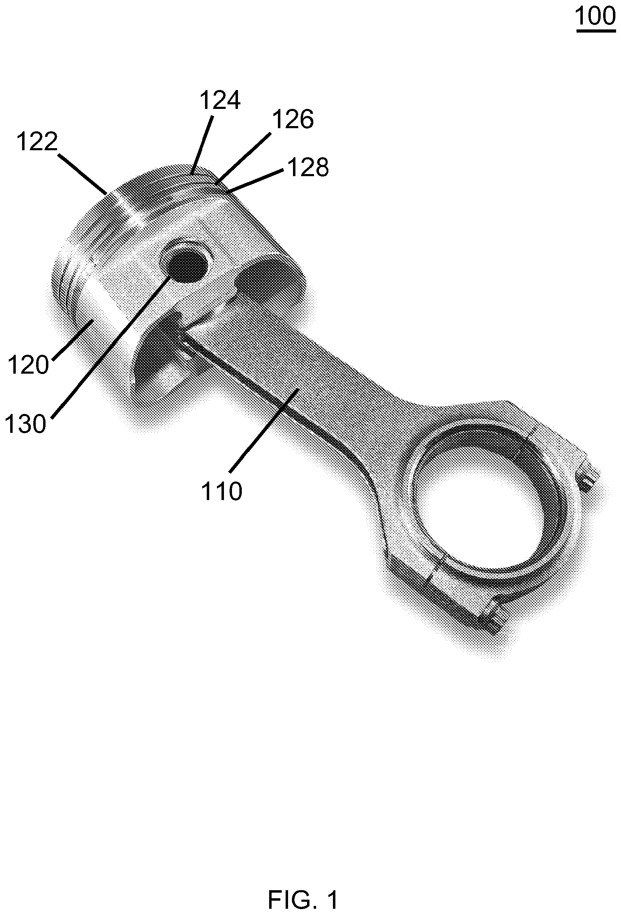

**FIG.** 1 is a perspective view of a piston assembly **100.** The piston assembly **100** is formed from a piston rod **110** and a piston head **120.** The piston crown **122** is the top surface of the piston head, and is subjected to the most force and heat during engine use. The piston head is illustrated here with three ring grooves, including a top ring groove **124,** middle ring groove **126,** and lower ring groove **128.** Different types of piston rings are inserted into these grooves. A pin bore **130** in the piston head extends perpendicularly through the side of the piston head. A pin (not visible) passes through the pin bore to connect the piston head to the piston rod.

The ring grooves are recesses extending circumferentially about the piston body. The ring grooves are sized and configured to receive piston rings. The ring grooves define two parallel surfaces of ring lands which function as sealing surfaces for piston rings.

Piston rings seal the combustion chamber, transfer heat from the piston to the cylinder wall, and return oil to the crankcase. Types of piston rings include compression rings, wiper rings, and oil rings.

Compression rings are typically located in the grooves closest to the piston crown, and are the subject of the present disclosure. Compression rings seal the combustion chamber to prevent leakage. Upon ignition of the air-fuel mixture, combustion gas pressure forces the piston toward the crankshaft. The pressurized gases travel through the gaps between the cylinder wall and the piston and into the ring groove. Pressure from the combustion gas forces the compression ring against the cylinder wall to form a seal.

Wiper rings (also known as scraper rings or back-up compression rings) typically have tapered faces located in ring grooves intermediate compression rings and oil rings. Wiper rings further seal the combustion chamber and wipe excess oil from the cylinder wall. In other words, combustion gases that pass by the compression ring may be stopped by the wiper ring. Wiper rings may provide a consistent oil film thickness on the cylinder wall to lubricate the rubbing surface of the compression rings. The wiper rings may be tapered toward the oil reservoir and may provide wiping as the piston moves in the direction of the crankshaft. Wiper rings are not used in all engines.

Oil rings are located in the grooves nearest the crankcase. Oil rings wipe excessive amounts of oil from the cylinder wall during movement of the piston. Excess oil may be returned through openings in the oil rings to an oil reservoir (i.e., in the engine block). In some embodiments, oil rings are omitted from two-stroke cycle engines.

Oil rings may include two relatively thin running surfaces or rails. Holes or slots may be cut into the rings (e.g., the radial centers thereof) to permit excess oil to flow back. The oil rings may be one-piece or multiple-piece oil rings. Some oil rings use an expander spring to apply additional pressure radially to the ring.

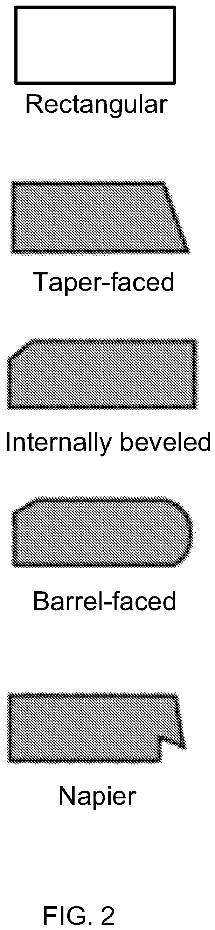

**FIG. 2** is a set of illustrations of different cross-sections of the piston compression rings of the present disclosure. The compression rings are annular rings, with the outer surface (that contacts the cylinder) being known as the running face. In all of these illustrations, the running face is on the right-hand side. The piston compression ring can have a rectangular cross-section, a taper-faced cross-section, an internally beveled cross-section, a barrel-faced cross-section, or a Napier cross-section. In the rectangular cross-section, the cross-section is rectangular. The internally beveled cross-section is similar to the rectangular cross-section, but has an edge relief on the top side of the inner surface of the piston ring (within the ring groove, not contacting the cylinder). In the taper-faced cross-section, the running face has a taper angle of from about 0.5 to about 1.5 degrees (e.g., about 1 degree). The taper may provide a wiping action to preclude excess oil from entering the combustion chamber. In the barrel-faced cross-section, the running face is curved, which provides consistent lubrication. Barrel-faced rings may also create a wedge effect to enhance the distribution of oil throughout each piston stroke. The curved running surface may also reduce the possibility of oil film breakdown caused by excessive pressure at the edge or excessive tilt during operation. The Napier cross-section has a taper on the running face, as well as a hook shape on the bottom side of the running face.

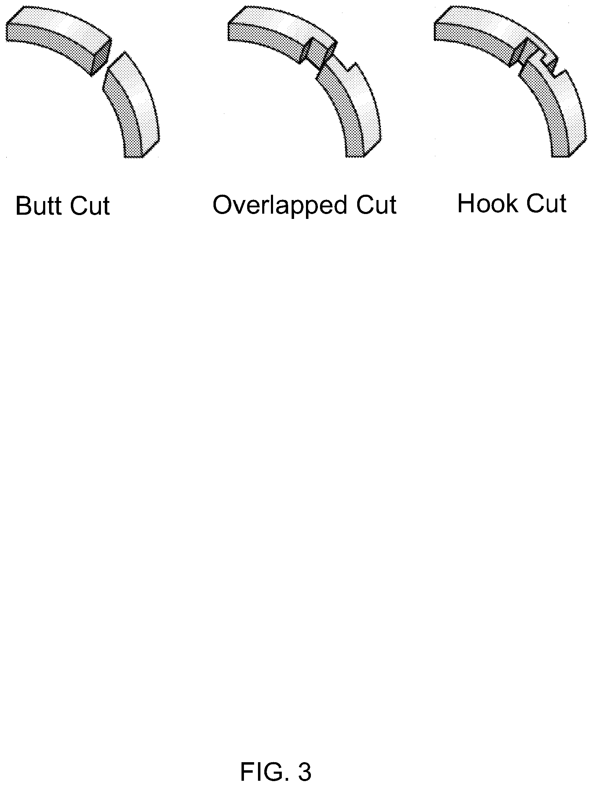

**FIG. 3** is a set of illustrations of different cuts / ends of the piston compression rings of the present disclosure. In some cases, to secure the piston ring within the ring grooves, the piston ring may be split through the circumference, creating a ring with two free ends near the split. Illustrated here are a butt cut, an overlapped cut, and a hook cut. In a butt cut, the ends are cut to be perpendicular relative to the bottom surface of the ring. In an angle cut, the ends are cut at an angle, roughly 45°, rather than perpendicularly as in the butt cut. In an overlapped cut, the ends are cut so that they overlap each other ("shiplap"). In a hook cut, the ends are cut to form a hook, with the hooks engaging each other. Please note that the cuts do not always have the free ends attached to each other. Such cuts are not always present in piston compression rings, For example, automotive piston compression rings can be complete circles, or can be designed with an open bias at the split. When inside a cylinder in a cold engine, the gap is nearly closed (within a few microinches), and the spring force from the open bias enhances contact with the cylinder. As the engine warms, the cylinder will expand faster than the ring, and the open gap maintains contact with the growing cylinder inside diameter.

In the present disclosure, the piston compression rings are made of a copper-containing alloy that comprises copper, nickel, silicon, and chromium. These copper alloys may have several times the thermal conductivity compared to conventional, iron-based materials used to make compression rings. The copper-nickel-silicon-chromium-containing alloys have higher strength at the piston operating temperatures than do other high conductivity alloys. These alloys also possess the stress relaxation resistance and wear resistance required in compression rings. It is also contemplated that wiper rings or oil rings could be made from the copper-nickel-silicon-chromium-containing alloys described herein. In some exemplary embodiments, the ring may have a weight of up to 0.11 kg (0.25 lbs), including from 0.045 kg (0.10 lbs) 0.11 kg (0.25 lbs), and including 0.067 kg (0.15 lbs). In other exemplary embodiments, the ring may have a weight of from 0.11 kg (0.25 lbs) to 0.45 kg (1.0 lbs). The size of the ring will depend on the engine size. It is contemplated that the ring could have an inner diameter (i.e. bore) of as much as 1000 millimeters, or even greater.

By using a piston ring material with higher thermal conductivity, heat will be conducted more quickly away from the ring groove, through the piston ring and into the cylinder liner. The lower temperature in the ring groove increases the yield strength of the piston material in the groove, and also increases the fatigue strength. The higher thermal conductivity ring material allows the top ring groove to be placed closer to the piston crown without risk of excessive groove wear.

The higher thermal conductivity rings made from the copper-nickel-silicon-chromium-containing alloys of the present disclosure may also have a lower coefficient of friction against the piston groove, which should reduce wear. It also may be possible to avoid the use of coatings, such as diamond-like carbon, that are required on high performance steel compression rings. It should also be possible to avoid alternatives to coatings like a surface hardening, such as nitriding, which is typically performed on iron-based rings.

The copper-containing alloys of the present invention contain nickel, silicon, and chromium.

The amount of nickel in the copper-nickel-silicon-chromium-containing alloy is from 5 wt% to 9 wt% of the alloy. In more specific embodiments, the amount of nickel may be from 6 wt% to 8 wt%; or from 6.4 wt% to 7.6 wt%.

The amount of silicon in the copper-nickel-silicon-chromium-containing alloy is from 1 wt% to 3 wt% of the alloy. In more specific embodiments, the amount of silicon may be from 1.5 wt% to 2.5 wt%.

The amount of chromium in the copper-nickel-silicon-chromium-containing alloy is from 0.2 wt% to 2.0 wt% of the alloy. In more specific embodiments, the amount of chromium may be from 0.3 wt% to 1.5 wt%; or from 0.6 wt% to 1.2 wt%.

In the invention the copper-containing alloy is a copper-nickel-silicon-chromium alloy that contains: 5 wt% to 9 wt% nickel; 1 wt% to 3 wt% silicon; 0.2 wt% to 2.0 wt% chromium; and balance copper.

In further embodiments, the copper-nickel-silicon-chromium alloy contains: 6 wt% to 8 wt% nickel; 1.5 wt% to 2.5 wt% silicon; 0.3 wt% to 1.5 wt% chromium; and balance copper.

In still more specific embodiments, the copper-nickel-silicon-chromium alloy contains: 6.4 wt% to 7.6 wt% nickel; 1.5 wt% to 2.5 wt% silicon; 0.6 wt% to 1.2 wt% chromium; and balance copper.

One commercially available alloy meeting these compositional requirements is from Materion Corporation and is available as MoldMax V® or PerforMet™. MoldMax V® / PerforMet™ has an elastic modulus of about 130 GPa; density of about 8.69 g/cc; and thermal conductivity at 100°C of about 160 W/(m•K). MoldMax V® / PerforMet™ has a typical minimum 0.2% offset yield strength of about 690 MPa; and a minimum ultimate tensile strength of about 790 MPa.

Generally speaking, the copper-nickel-silicon-chromium-containing alloys of the present disclosure may have a thermal conductivity of from about 130 to about 200 W/(m•K), including from about 150 to about 170 W/(m•K). In comparison, conventional steel has a thermal conductivity of about 38 to about 50 W/(m•K).

The use of these alloys reduces the maximum temperature of the piston crown due to increased heat transfer from the piston to the cylinder wall and the engine block. The reduced maximum crown temperature lowers the probability of preignition and increases the ability of the piston to withstand higher pressures. The piston height can also be reduced, improving efficiency by reducing frictional losses due to side forces on the piston and reducing the reciprocated mass in the engine. The compression ring also has reduced friction against the piston ring groove, reducing groove wear and blowby. These alloys also have a coefficient of thermal expansion closer to that of the aluminum typically used for the piston head, limiting the increase in crevice volume associated with thermal expansion. Ignition timing advance can also be realized by using these rings and letting the engine control unit (ECU) advance the timing. Also, longer connecting rods can be used, which reduces the frictional loss caused by radial forces pushing the piston against the liner. Both reducing volume and tendency for pre-ignition increase engine efficiency.

The present disclosure has been described with reference to exemplary embodiments. Modifications and alterations will occur to others upon reading and understanding the preceding detailed description. It is intended that the present disclosure be construed as including all such modifications and alterations insofar as they come within the scope of the appended claims.

## Claims

1. A piston ring formed from a copper-containing alloy comprising: 5 wt% to 9 wt% nickel;
1 wt% to 3 wt% silicon;
0.2 wt% to 2.0 wt% chromium; and
balance copper.

2. The piston ring of claim 1, wherein the copper-containing alloy is a copper-nickel-silicon-chromium alloy that contains:
6 wt% to 8 wt% nickel;
1.5 wt% to 2.5 wt% silicon;
0.3 wt% to 1.5 wt% chromium; and
balance copper.

3. The piston ring of claim 1, wherein the copper-containing alloy is a copper-nickel-silicon-chromium alloy that contains:
6.4 wt% to 7.6 wt% nickel;
1.5 wt% to 2.5 wt% silicon;
0.6 wt% to 1.2 wt% chromium; and
balance copper.

4. The piston ring of claim 1, wherein the piston ring consists essentially of the copper-containing alloy.

5. The piston ring of claim 1, wherein the piston ring is uncoated.

6. The piston ring of claim 1, having a rectangular or trapezoidal cross-section.

7. The piston ring of claim 1, having a butt cut, an angle cut, an overlapped cut, or a hook cut.

8. The piston ring of claim 1, wherein the piston ring weighs up to 0.11 kg (0.25 pounds).

9. The piston ring of claim 1, wherein the piston ring weighs from 0.11 kg to 0.45 kg (0.25 pounds to 1.0 pound).

10. A piston assembly, comprising:
a piston body comprising a top ring groove; and
a piston ring according to any one of claims 1 to 9.

11. A method of improving engine efficiency, comprising:
providing a piston assembly in an engine, the piston assembly comprising:
a piston body comprising a top ring groove; and
a piston ring according to any one of claims 1 to 9.

12. A method of making a piston ring, comprising:
forming the piston ring from a copper-containing alloy comprising: 5 wt% to 9 wt% nickel;
1 wt% to 3 wt% silicon;
0.2 wt% to 2.0 wt% chromium; and
balance copper.

## Patentansprüche

1. Kolbenring, gebildet aus einer kupferhaltigen Legierung, umfassend:
5 Gew.-% bis 9 Gew.-% Nickel;
1 Gew.-% bis 3 Gew.-% Silizium;
0,2 Gew.-% bis 2,0 Gew.-% Chrom; und
als Rest Kupfer.

2. Kolbenring nach Anspruch 1, wobei die kupferhaltige Legierung eine Kupfer-Nickel-Silizium-Chrom-Legierung ist, die enthält:
6 Gew.-% bis 8 Gew.-% Nickel;
1,5 Gew.-% bis 2,5 Gew.-% Silizium;
0,3 Gew.-% bis 1,5 Gew.-% Chrom; und
als Rest Kupfer.

3. Kolbenring nach Anspruch 1, wobei die kupferhaltige Legierung eine Kupfer-Nickel-Silizium-Chrom-Legierung ist, die enthält:
6,4 Gew.-% bis 7,6 Gew.-% Nickel;
1,5 Gew.-% bis 2,5 Gew.-% Silizium;
0,6 Gew.-% bis 1,2 Gew.-% Chrom; und
als Rest Kupfer.

4. Kolbenring nach Anspruch 1, wobei der Kolbenring im Wesentlichen aus der kupferhaltigen Legierung besteht.

5. Kolbenring nach Anspruch 1, wobei der Kolbenring unbeschichtet ist.

6. Kolbenring nach Anspruch 1, aufweisend einen rechteckigen oder trapezförmigen Querschnitt.

7. Kolbenring nach Anspruch 1, aufweisend einen Stumpfschnitt, einen Winkelschnitt, einen Überlappungsschnitt oder einen Hakenschnitt.

8. Kolbenring nach Anspruch 1, wobei der Kolbenring bis zu 0,11 kg (0,25 Pfund) wiegt.

9. Kolbenring nach Anspruch 1, wobei der Kolbenring ein Gewicht von 0,11 kg bis 0,45 kg (0,25 Pfund bis 1,0 Pfund) aufweist.

10. Kolbenanordnung, umfassend:
einen Kolbenkörper, der eine obere Ringnut umfasst; und
einen Kolbenring nach einem der Ansprüche 1 bis 9.

11. Verfahren zum Verbessern des Wirkungsgrades eines Motors, umfassend:
Bereitstellen einer Kolbenanordnung in einem Motor, wobei die Kolbenanordnung umfasst:
einen Kolbenkörper, der eine obere Ringnut umfasst; und
einen Kolbenring nach einem der Ansprüche 1 bis 9.

12. Verfahren zur Herstellung eines Kolbenrings, umfassend:
Bilden des Kolbenrings aus einer kupferhaltigen Legierung, umfassend:
5 Gew.-% bis 9 Gew.-% Nickel;
1 Gew.-% bis 3 Gew.-% Silizium;
0,2 Gew.-% bis 2,0 Gew.-% Chrom; und
als Rest Kupfer.

## Revendications

1. Segment de piston formé à partir d'un alliage contenant du cuivre comprenant : 5 % à 9 % en poids de nickel ;
1 % à 3 % en poids de silicium ;
0,2 % en poids à 2,0 % en poids de chrome ; et
le restant du cuivre.

2. Segment de piston selon la revendication 1, dans lequel l'alliage contenant du cuivre est un alliage de cuivre-nickel-silicium-chrome qui contient :
6 % en poids à 8 % en poids de nickel ;
1,5 % en poids à 2,5 % en poids de silicium ;
0,3 % à 1,5 % en poids de chrome ; et
le restant du cuivre.

3. Segment de piston selon la revendication 1, dans lequel l'alliage contenant du cuivre est un alliage de cuivre-nickel-silicium-chrome qui contient :
6,4 % à 7,6 % en poids de nickel :
1,5 à 2,5 % en poids de silicium ;
0,6 % à 1,2 % en poids de chrome ; et
le restant du cuivre.

4. Segment de piston selon la revendication 1, dans lequel le segment de piston est essentiellement constitué de l'alliage contenant du cuivre.

5. Segment de piston selon la revendication 1, dans lequel le segment de piston n'est pas revêtu.

6. Segment de piston selon la revendication 1, ayant une section transversale rectangulaire ou trapézoïdale.

7. Segment de piston selon la revendication 1, ayant une coupe en bout, une coupe angulaire, une coupe chevauchante ou une coupe en crochet.

8. Segment de piston selon la revendication 1, dans lequel le segment de piston pèse jusqu'à 0,11 kg (0,25 pounds).

9. Segment de piston selon la revendication 1, dans lequel le segment de piston pèse de 0,11 kg à 0,45 kg (0,25 pounds à 1,0 pounds).

10. Assemblage de piston, comprenant :
un corps de piston comprenant une rainure de segment supérieur ; et
un segment de piston selon l'une des revendications 1 à 9.

11. Méthode d'amélioration du rendement des moteurs, comprenant :
arranger un ensemble de piston dans un moteur, l'ensemble de piston comprenant :
un corps de piston comprenant une rainure de segment supérieur ; et
un segment de piston selon l'une des revendications 1 à 9.

12. Méthode de fabrication d'un segment de piston, comprenant :
former le segment de piston à partir d'un alliage contenant du cuivre comprenant : 5 % en poids à 9 % en poids de nickel ;
1 % en poids à 3 % en poids de silicium ;
0,2 % en poids à 2,0 % en poids de chrome ; et
le restant du cuivre.
